# EUROPÄISCHE PATENTSCHRIFT

(11) **EP 2 762 328 B1**
(45) Veröffentlichungstag und Bekanntmachung des Hinweises auf die Patenterteilung: **25.11.2015**
(21) Anmeldenummer: 13000437.7
(22) Anmeldetag: 30.01.2013
(51) Int. Cl.: B44C 5/04, E04F 15/00

(54) **Verfahren zur Herstellung einer beidseitig beschichteten dekorierten Holzwerkstoffplatte**
Method for producing a decorated wooden board coated on both sides
Procédé de fabrication d'un panneau en bois décoré revêtu de chaque côté

(43) Veröffentlichungstag der Anmeldung: 06.08.2014
(73) Patentinhaber: Flooring Technologies Ltd., Pieta PTA 9044 (MT)
(72) Erfinder: Kalwa, Norbert, 32805 Horn-Bad Meinberg (DE); Weigl, Martin, 16909 Wittstock/Dosse (DE)
(74) Vertreter: Rehmann, Thorsten

(56) Entgegenhaltungen:
- EP-A1- 2 338 693
- EP-A1- 2 402 173
- WO-A1-2012/037950
- DE-A1-102011 001 807
- DE-U1-202004 002 677

## Beschreibung

Die Erfindung betrifft ein Verfahren zur Herstellung einer beidseitig beschichteten dekorierten Holzwerkstoffplatte mit einer Oberseite und einer Unterseite.

Eine nach diesem Verfahren hergestellte Holzwerkstoffplatte wird auch Laminatplatte genannt. Aus einer solchen Holzwerkstoffplatte ausgeschnittene Paneele werden an gegenüberliegenden Seitenkanten mit zueinander korrespondierenden Verbindungs- und Verriegelungsmitteln versehen, als Laminatpaneele bezeichnet und üblicherweise als Fußbodenpaneele verwendet.

Die WO 2012/037950 A1 beschreibt ein Verfahren zum Herstellen von Fußbodenpaneelen, bei dem auf einer Holzwerkstoffplatte in mehreren Schichten unter anderem ein Dekor und eine Versiegelung aufgebracht werden, wobei die einzelnen Schichten jeweils flüssig aufgetragen und vor dem Auftragen der nächsten Schicht getrocknet werden.

Die EP 2 338 693 A1 beschreibt ein Verfahren zum Veredeln einer Holzwerkstoffplatte, die mit einem Dekor versehen ist, bei dem auf die Holzwerkstoffplatte nacheinander zumindest drei flüssige Harzschichten, die unterschiedliche Zuschlagstoffe enthalten, aufgebracht werden, wobei jede der Harzschichten vor dem Aufbringen der jeweils nächsten Schicht beziehungsweise vor dem Verpressen des Schichtaufbaus getrocknet wird.

Aus der DE 10 2010 030 752 A1 ist ein Verfahren zur Herstellung einer Holzwerkstoffplatte bekannt, bei dem als Overlay eine Schicht aus pulverförmigem Harz aufgestreut wird. Die Schicht aus pulverförmigem Harz ist eine Zusammensetzung. Sie besteht neben einem durch Erwärmen schmelzbaren und aushärtbaren Harz gegebenenfalls auch aus Bestandteilen die unter Bildung eines solchen Harzes reagieren können. Diese Zusammensetzung bildet nach dem Verpressen die spätere Deck- und Verschleißschutzschicht des Laminats. Die thermisch aushärtbaren Harze stammen bevorzugt aus den Gruppen Aminoharze und/oder Phenolharze. Ebenfalls verwendbar sind Epoxid- und Acrylharze. Soweit erforderlich erhält sie auch eine oder mehrere Initiatoren und/oder Katalysatoren (Härter) für die thermische Aushärtung. Bevorzugte Harze sind Harnstoff-Formaldehyd-Harze, Melaminharze, Phenol-Formaldehyd-Harze. Die Zusammensetzung kann alternativ oder zusätzlich zu solchen Harzen auch Stoffe enthalten, die Vorstufen zu diesen Harzen darstellen, wie Melamin, Harnstoff, Phenol, Formaldehyd und deren Derivate. Bevorzugt enthält sie weitere Bestandteile, wie sie zur Verbesserung der Eigenschaften der Deckschicht bekannt sind. Dazu gehören insbesondere harte Partikel zur Steigerung der Abriebfestigkeit, wie beispielsweise Korund, Siliziumcarbid, Siliziumdioxid, Glasteilchen, Pyrophylit, Verstärkungsfasern, beispielsweise aus Zellulose, sowie übliche Zusätze für Kunststoffe, wie Stabilisatoren, Aufheller, UV-Absorber, Füllstoffe organischer und anorganischer Natur, Zusätze für optische Effekte usw. Auch können Zellulosefasern und/oder Glaskugeln beigefügt sein, die größer sind als die harten Partikel, um die Abnutzung der Pressbleche beim Verpressen des Laminats zu reduzieren. Die Dekorschicht wird durch eine bedruckte Papierbahn erzeugt. Diese Papierbahn wird auf die Holzwerkstoffplatte aufgeklebt, wobei der Klebstoff noch nicht völlig ausgehärtet ist. Dies erfolgt erst im späteren Pressprozess. Aus einzelnen Holzwerkstoffplatten wird ein Endlosstrang gebildet, der anschließend mit einem wässrigen Harnstoff-Formaldehydleim beidseitig beleimt wird. Auf die Oberseite der Holzwerkstoffplatte wird das Dekorpapier und auf die Unterseite ein Gegenzug aufgedrückt. Beide Papiere werden von der Rolle verarbeitet.

Nachteilig an diesem Verfahren ist, dass beide Papierbahnen exakt geführt werden müssen, damit kein Verlauf in Bezug auf den Holzwerkstoffplatten-Strang auftritt. Durch eine aufwendige Prozessüberwachung muss eine Aufdopplung der Holzwerkstoffplatten vermieden werden. Außerdem besteht die Gefahr, dass durch die Verwendung von wässrigen Klebern das Dekorpapier quillt und sich Falten zeigen. Durch das Wasser im Kleber kann der (Farb-) Druck auf dem Papier angelöst werden, wodurch sich die Fixierung der Farbe auf dem Papier verschlechtert, was dann im weiteren Fertigungsprozess durch den Kontakt mit Walzen oder ähnlichem zu Farbabrieb, Farbauswaschungen oder einer Verschlechterung der Druckqualität führen kann. Auch ist nicht ausgeschlossen, dass der nicht vollständig ausgehärtete Kleber durch das aufgelegte Dekorpapier "durchschlägt", was zu Veränderungen der optischen Eigenschatten sowie zu Benetzungsproblemen im weiteren Schichtaufbau führen kann. Außerdem sind Dekorpapiere im Hinblick auf ihre Pigmentbeladung, Dichte und Penetrierbarkeit durch Harz höchst unterschiedlich. Leim von unten migriert im Herstellungsprozess über eine undefinierte Strecke in das Papier. Beim Auftragen des Harzpulvers von oben wird dieses später in der Presse verflüssigt und trifft auf im Papier eingeschlossene Luftpolster. Die luftgefüllte Schicht stellt eine Schwachzone in der verpressten Holzwerkstoffplatte dar, da eine Delaminierung an diesen Stellen nicht ausgeschlossen ist. Außerdem kann diese Schwachzone bei der weiteren Bearbeitung zu Ausrissen führen.

Die rohen Holzwerkstoffplatten sind an ihren Oberseiten mit einer sogenannten Presshaut, die auch Verrottungsschicht genannt wird, ausgebildet. Diese Presshaut entsteht unvermeidbar beim Verpressen des Holzwerkstoffes bei der Plattenherstellung. Diese Presshaut muss vor der weiteren Verarbeitung angeschliffen oder vollständig entfernt werden, weil diese niedrig verdichtete Zone üblicherweise nicht hinreichend durch die eingesetzten Harze im aufgelegten Dekorpapier mit imprägniert werden kann. Es bestünde sonst kein ausreichender Werkstoffverbund, was eine lokale oder großflächige Delaminierung zur Folge haben könnte.

Aus der DE 195 32 819 A1 ist ein Verfahren zum Veredeln einer Holzwerkstoffplatte bekannt, bei dem kein bedrucktes Dekorpapier verwendet wird, sondern auf der Oberseite wird eine Druckgrundlage durch eine mehrschichtige Versiegelung mit flüssig aufgebrachtem Harz geschaffen, auf die dann der Dekordruck mittels Gravurzylindern aufgebracht wird. Anschließend wird die Platte in einem ersten Schritt mit einem UV-härtbaren Lack versehen. Abschließend wird ein Acrylat-UV-Lack aufgebracht, der anschließend mit Quecksilberdampfstrahlern ausgehärtet wird. Nach der Aushärtung der Oberflächen werden die Platten zu Paneelen konfektioniert.

Der Direktdruck, also das Fortlassen des Dekorpapiers, bietet den großen Vorteil, dass Dekorumstellungen schnell und einfach zu realisieren sind, was die Umrüstzeiten reduziert, außerdem ist keine Kapital bindende und Lagerraum benötigende Auswahl an diversen Dekorpapieren notwendig, wodurch die Herstellkosten reduziert werden können. Die Technologie des Flüssigauftragens der einzelnen Schichten hat den Nachteil, dass die einzelnen Schichten sehr sorgfältig getrocknet werden müssen, bevor die nächste Schicht aufgetragen werden kann, da sonst Feuchtigkeit im Harz eingeschlossen wird.

Von dieser Problemstellung ausgehend soll das eingangs beschriebene Verfahren verbessert werden.

Die Problemlösung erfolgt durch folgende Schritte:
- Aufbringen einer flüssigen Schicht als Primer auf die Oberseite der Holzwerkstoffplatte unter teilweisem Eindringen des Primers in die Oberseite der Holzwerkstoffplatte;
- Aufbringen einer flüssigen Schicht als Grundierung auf den Primer;
- Aufbringen einer oder mehrerer flüssiger Farbschichten zur Bildung eines Dekors auf der Grundierung;
- Aufbringen einer flüssigen Schutzschicht aus Melamin-Formaldehyd-Harz auf das Dekor und anschließendes Trocknen der Schutzschicht;
- Aufbringen wenigstens einer flüssigen Schicht als Gegenzug auf der Unterseite der Holzwerkstoffplatte;
- Aufstreuen einer partikelförmigen Schicht als Overlay auf die Schutzschicht auf der dekorierten Oberseite, wobei das Overlay wenigstens Harzpartikel umfasst;
- Verpressen der Holzwerkstoffplatte mit dem Schichtaufbau, sodass der gesamte Harzaufbau verflüssigt wird und dadurch bis in die Holzwerkstoffplatte penetrieren kann, zur Ausbildung eines Laminats;
- Aufteilen der Holzwerkstoffplatte in Paneele und
- Anarbeiten von Verbindungs- und Verriegelungsmitteln nach Art von Nut und Feder an den Seitenkanten der Paneele zur leimlosen Verbindung und Verriegelung zur Ausbildung eines schwimmend verlegbaren Fußbodenbelages.

Das Aufbringen einer oder mehrerer flüssigen Farbschichten kann durch ein übliches Druckverfahren erfolgen. Dieses Druckverfahren ist vorzugsweise ein Tiefdruck- oder Digitaldruckverfahren.

Überraschenderweise hat sich gezeigt, dass die Anwendung des Direktdruckverfahrens für die Erzeugung des Dekordrucks und das Streuen einer partikelförmigen Schicht zur Erzeugung der späteren Deckschicht hervorragende Ergebnisse hinsichtlich der Klarheit des Druckbildes und der Festigkeit bzw. des Zusammenhalts des Laminataufbaus liefert, was für den Fachmann überhaupt nicht zu erwarten war.

Für den Fachmann schließt sich die Kombination der beiden aus der DE 10 2010 030 752 A1 und der DE 195 32 819 A1 bekannten Verfahren aus.

Es hat sich jedoch herausgestellt, dass anstatt der erwarteten Unschärfe im Dekor eine im Gegenteil besonders klare Ausbildung erfolgt. Während des Aufschmelzprozesses ist folglich eine ausreichende Penetration zwischen der Deckschicht (Overlay) und der Dekorschicht erfolgt. Trübungen und Farbabweichungen sind nicht sichtbar und auch die erwartete reduzierte mechanische Stabilität stellt sich nicht ein.

Aufgrund der ausreichenden Restfeuchte in der Druckfarbe bildet sich in der Druckfarbenoberfläche eine ausreichend hohe Affinität zu den Partikeln aus, wodurch auch die Penetration des Harzes beim Schmelzen begünstigt wird. Durch eine geeignete Wahl gut fließfähiger Melaminharze (z. B. geringes Molverhältnis, geringe Härtekonzentration oder härterfrei) kann es zu einer optimalen Verbindung zwischen Druckfarbe und Deckschicht kommen. Prozessbedingt werden dadurch optische und mechanische Abweichungen ausgeschlossen. Obwohl das Dekor nicht unmittelbar auf der Platte verankert ist, treten Delaminierungserscheinungen nicht auf. Das eingesetzte System ist nach der Grundierung nahezu wasserfrei und damit wird die Gefahr des Anlösens der Druckfarbe im weiteren Fertigungsprozess eliminiert. Eine Farbauswaschung wird dadurch wirksam verhindert. Durch den Fortfall des Papiers ist die Ausbildung eines Endlosstranges nicht länger notwendig, wodurch der Fertigungsprozess deutlich einfacher wird. Durch die Grundierschicht wird die Dekorschicht besser an die Holzwerkstoffplatte angebunden, was das Anschleifen bzw. das Entfernen der Presshaut nicht notwendig werden lässt.

Der vor dem Verpressen auf die Unterseite der Holzwerkstoffplatte aufgebrachte Gegenzug wird als flüssige Harzschicht aufgebracht und vorzugsweise vor dem Verpressen getrocknet. Durch einen symmetrischen Plattenaufbau mit gleichwertiger Oberseite und Gegenzug können ungewünschte Verformungen durch innere Spannungen gut unterbunden werden.

Ein symmetrischer Plattenaufbau mit gleichwertiger Oberseite und Gegenzug bietet außerdem die Möglichkeit, die Platte beidseitig verwendbar auszubilden. Werden aus der Holzwerkstoffplatte Bodenpaneele aufgeteilt und die Verbindungssysteme an den Seitenkanten entsprechend angepasst, können diese als Wendepaneele verwendet werden. Somit kann ein Paneel beliebig mit einer der beiden Seiten nach oben zum Einsatz kommen. Der Einsatz eines Wendepaneels mit angepasstem Längsverbindungsprofil ermöglicht es, wahlweise die Ausrichtung des Verlegens in Querrichtung zu verändern. Ein Wendepaneel mit angepasstem Querverbindungsprofil ermöglicht es wiederum die Ausrichtung der Verlegung in Längsrichtung zu verändern: Durch Anpassung aller vier Verbindungsprofilgeometrien kann folglich mittels eines Wendepaneels die höchste Flexibilität bei der Verlegung erzielt werden, da sie sowohl in Längs- als auch in Querrichtung frei gewählt werden kann.

Wendepaneele können auch qualitativ gleichwertige, jedoch unterschiedlich gestaltete Dekore aufweisen. Somit kann die Dekorvielfalt verdoppelt werden. Alternativ kann mit einer solchen Ausgestaltung die benötigte Dekorvielfalt je Auftragswerk reduziert werden. Hierdurch können die Auftragswerke und umgebende Verarbeitungssysteme einfacher ausgeführt und präzise eingestellt werden.

Weitere mögliche Anwendungen von Wendepaneelen sind architektonische oder designerische Lösungen, bei welchen punktuell oder flächig, je nach Betrachtungsrichtung, beide Dekorseiten eines Paneels sichtbar sein können. Dies kann beispielsweise bei transparenten oder teiltransparenten Brücken oder Übergängen, Treppen, Wandverkleidung, wahlweise auch in Kombination mit Glas oder anderen transparenten Materialien, Akustikelementen, sowie Möbeldesign der Fall sein. Je nach Anwendungsfall können Wendepaneele mit oder ohne seitliche Verbindungssysteme ausgeführt werden. Derartige Paneele können demnach auch als Substitute für Hochdrucklaminate (HPL) eingesetzt werden. Wendepaneele ohne seitliche Verbindungssysteme können zusätzlich mittels einer weiteren Adaption des Verfahrens auch an den Seitenkanten einen gleichwertigen Schichtaufbau vorweisen. Somit entstehen hochwertige, vollständig oberflächlich vergütete Paneele, die zusätzlich ein sehr stark reduziertes Quell-Schwind-Verhalten aufweisen.

Vorteilhaft ist es, wenn auf die Dekorschicht mindestens eine Haftverbesserungsschicht flüssig aufgetragen und getrocknet wird, um die Haftung zwischen der Deckschicht und der Dekorschicht zu erhöhen.

Die Grundierung kann farblos oder entsprechend dem später aufzudruckenden Dekor eingefärbt sein.

Als Primer wird vorzugsweise ein Melamin-Formaldehyd-Tränkharz, ein Melamin-Formaldehyd-Leim oder ein Gemisch aus diesen eingesetzt und insbesondere vorzugsweise 20 bis 50g flüssiges Harz pro m² mit einem Feststoffanteil von etwa 50 bis 60% aufgetragen.

Die Holzwerkstoffplatte wird beim Aufbringen des Primers vorzugsweise mit einer Geschwindigkeit von 50 bis 120m/min vorgeschoben.

Vorteilhaft ist es, wenn 3 bis 6 flüssige Farbschichten zur Bildung des Dekors aufgetragen werden. Für die Farbschichten werden vorzugsweise pigmentierte Kaseine verwendet.

Pro Farbschicht werden 0,5 bis 3g/m², insbesondere vorzugsweise 1 bis 2g/m² aufgetragen. Beim Auftrag der flüssigen Farbschicht wird die Holzwerkstoffplatte vorzugsweise mit einer Geschwindigkeit von 50 bis 120m/min vorgeschoben.

Die Primerschicht und/oder die flüssigen Farbschichten werden durch Konvektion oder Nahinfrarot (NIR) getrocknet.

Zur Ausbildung des Dekors werden vorzugsweise mindestens zwei und maximal sechs Farben verwendet.

Der Primer kann Hilfsstoffe, wie vorzugsweise Netzmittel, Trennmittel, Entschäumer und/oder Härter enthalten. Die Hilfsstoffe können alternativ oder kumulativ vorgesehen werden.

Als Schutzschicht wird vorzugsweise ein Melamin-Formaldehyd-Harz verwendet, das zusätzlich alternativ oder kumulativ Glaskugeln, Zellulose, Netzmittel, Trennmittel, Entschäumer und/oder Härter enthält.

Für die Schutzschicht wird vorzugsweise 10 bis 50g, insbesondere vorzugsweise 20 bis 40g flüssiges Harz aufgetragen. Der Feststoffanteil im flüssigen Harz beträgt vorzugsweise etwa 55%.

Beim Auftragen der Schutzschicht wird die Holzwerkstoffplatte vorzugsweise mit einer Geschwindigkeit von 50 bis 120m/min vorgeschoben.

An Stelle einer flüssigen Schicht als Gegenzug kann auch eine imprägnierte Papierlage auf die Unterseite der Holzwerkstoffplatte aufgebracht werden.

Die flüssige Schicht für den Gegenzug kann Hilfsstoffe, wie vorzugsweise Netzmittel, Trennmittel, Härter und/oder Farbstoffe enthalten. Auch diese Hilfsstoffe können jeweils alternativ oder kumulativ in jedweder Kombination vorgesehen sein.

Die flüssige Schicht für den Gegenzug wird vorzugsweise in einer Menge von 50 bis 100g/m², insbesondere 80 bis 120g/m² aufgetragen. Dabei kann das flüssige Harz einen Feststoffanteil von etwa 60% besitzen.

Beim Aufbringen der flüssigen Schicht für den Gegenzug wird die Holzwerkstoffplatte vorzugsweise mit einer Geschwindigkeit von 30 bis 60m/min vorgeschoben.

Das Harz für den Gegenzug wird vorzugsweise mittels Konvektion oder Nahinfrarot (NIR) getrocknet.

Die partikelförmige Schicht für das Overlay kann als Hauptbestandteil Zuschlagsstoffe wie Korund und Zellulose enthalten. Darüber hinaus können vorzugsweise Zuschlagsstoffe wie Netzmittel, Trennmittel, Härter, Effekt-Pigmente und/oder Farbpigmente einzeln oder in jedweder Kombination enthalten sein.

Die partikelförmige Schicht für das Overlay wird vorzugsweise in einer Menge von 50 bis 300g/m² aufgetragen.

Die Größe der Partikel der Zuschlagsstoffe beträgt vorzugsweise 20 bis 100µm, insbesondere vorzugsweise 30 bis 70µm.

Der Schichtaufbau wird anschließend in einer Kurztaktpresse (KT-Presse) bei einer Temperatur von 180 bis 220°C und einem Druck von 300 bis 700N/cm² für etwa 6 bis 20 Sekunden verpresst. Dabei wird der gesamte Harzaufbau verflüssigt und kann dadurch bis in die Holzwerkstoffplatte penetrieren. Parallel dazu wird durch den Härter eine Vernetzung der Mono- bzw. Oligomere in der Harzmatrix zu einem dreidimensionalen Netzwerk initiiert. Um eine Struktur in die Oberseite beim Verpressen einzuprägen, ist auf der Ober- und der Unterseite der KT-Presse ein verchromtes Stahlblech vorgesehen. Die Struktur kann zumindest teilweise Synchron mit dem Dekor verlaufen. Beim Aushärten wird das Dekor dann unter Ausbildung einer Oberflächenstruktur dauerhaft mit der Holzwerkstoffplatte verbunden. Die Oberflächenstruktur weist vorzugsweise eine Tiefe von 50 bis 400µm auf.

Vor dem Verpressen können auf das Overlay antibakteriell und/oder antistatisch wirksame Additive aufgebracht werden.

Mit Hilfe der beigefügten Zeichnung soll der Aufbau einer Holzwerkstoffplatte, die nach dem erfindungsgemäßen Verfahren hergestellt wurde, kurz beschrieben werden:
Es zeigt:

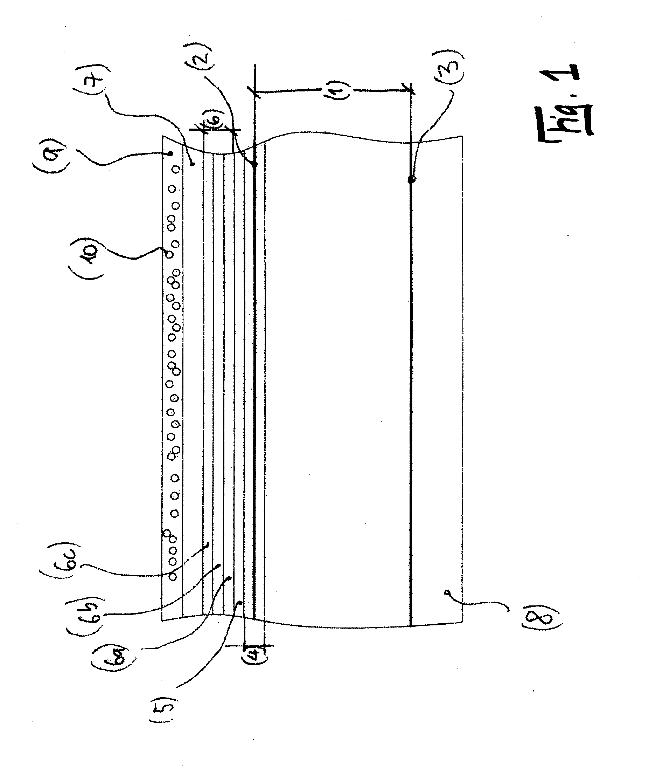

   - Figur 1 -: den Querschnitt durch ein noch nicht verpresstes Laminat in schematischer Darstellung;

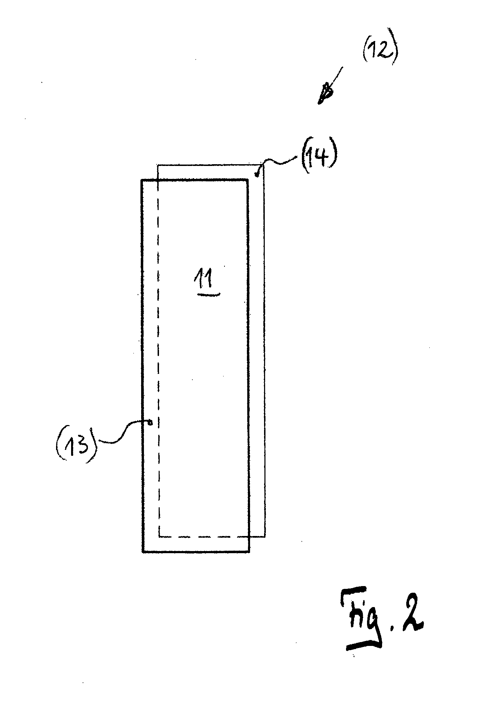

   - Figur 2 -: die Draufsicht auf ein Paneel.

Bei der Holzwerkstoffplatte 1 handelt es sich um eine herkömmliche Faserplatte (HDF oder MDF). Auf die Oberseite 2 wird eine Schicht 4 eines flüssigen, vorzugsweise transparenten Melamin-Formaldehyd-Harzes als Primer aufgebracht. Diese flüssige Schicht 4 dringt teilweise in die Oberseite 2 der Holzwerkstoffplatte 1 ein. Das Melamin-Formaldehyd-Tränkharz für den Primer 4 wird vorzugsweise in einer Menge von 20 bis 50g mit einem Feststoffanteil von 50 bis 60% aufgetragen. Während des Auftrages des Primers 4 wird die Holzwerkstoffplatte mit einer Geschwindigkeit von 50 bis 120m/min vorgeschoben. Anschließend wird auf den Primer 4 eine flüssige Schicht als Grundierung 5 aufgebracht. Auf die Grundierung 5 werden dann drei bis sechs flüssige Farbschichten 6a, 6b, 6c zur Bildung eines Dekors 6 aufgetragen. Für die Farbschichten 6a, 6b, 6c werden pigmentierte Kaseine verwendet. Jede Farbschicht 6a, 6b, 6c wird in einer Menge von etwa 0,5 bis 3g/m², vorzugsweise 1 bis 2g/m² aufgetragen. Beim Auftrag der flüssigen Farbschichten 6a, 6b, 6c wird die Holzwerkstoffplatte 1 ebenfalls mit einer Geschwindigkeit von 50 bis 120m/min vorgeschoben. Auf das Dekor 6 wird schließlich eine flüssige Schutzschicht 7 aufgetragen, die anschließend durch Konvektion oder Nahinfrarot (NIR) getrocknet wird. Die Schutzschicht besteht aus Melamin-Formaldehyd-Harz und enthält Glaskugeln, Zellulose, Netzmittel, Trennmittel, Entschäumer und/oder Härter. Diese Zusatzstoffe müssen nicht kumulativ in dem Harz vorhanden sein. Sie können auch alternativ oder in jedweder Kombination dem Harz zugemischt werden oder auch ersatzlose entfallen. Auf die Unterseite 3 der Holzwerkstoffplatte 1 wird wenigstens eine flüssige Schicht als Gegenzug 8 aufgebracht. Als Gegenzug kann aber auch ein harzgetränktes Papier aufgebracht werden. Beim Aufbringen der flüssigen Schicht für den Gegenzug 8 wird die Holzwerkstoffplatte 1 mit einer Geschwindigkeit von 30 bis 60 m/min vorgeschoben. Vorzugsweise wird eine Menge von 50 bis 150 g/m², insbesondere vorzugsweise 80 bis 120 g/m² flüssiges Harz für den Gegenzug aufgetragen. Der Feststoffanteil im flüssigen Harz beträgt etwa 60%. Das Trocknen des Gegenzuges 8 erfolgt mittels Konvektion oder Nahinfrarot (NIR).

Auf die Schutzschicht 7 wird eine partikelförmige Schicht in einer Menge von 50 bis 300g/m² als Overlay 9 aufgestreut. Die partikelförmige Schicht 7 weist zumindest Harzpartikel 10 auf. Außerdem können Korund- und/oder Zellulosepartikel vorgesehen sein. Des Weiteren kann die partikelförmige Schicht Netzmittel, Trennmittel, Härter, Effekt-Pigmente und/oder Farbpigmente enthalten. Die Größe der partikelförmigen Zuschlagsstoffe liegt zwischen 20 und 100µm. Falls gewünscht, können auf das Overlay 9 antibakteriell und/oder antistatisch wirksame Additive aufgebracht werden.

Anschließend wird die partikelförmige Zusammensetzung erwärmt, sodass das Harz aufschmilzt, und der gesamte Aufbau wird zur Herstellung des Laminats einer Kurztaktpresse zugeführt und unter hoher Temperatur und Druck miteinander verpresst. Zur Ausbildung einer zumindest teilweise zum Dekor 6 synchronen Struktur in der Oberfläche der Overlayschicht 9 kann das Pressblech der Kurztaktpresse entsprechend graviert sein.

Beim Verpressen bei einer Temperatur von 180°C bis 220°C und einem Druck von 300 bis 700 N/cm2 für 6 bis 20 Sekunden wird der gesamte Harzaufbau verflüssigt und kann dadurch bis in die Holzwerkstoffplatte 1 penetrieren. Parallel wird durch den Härter eine Vernetzung der Mono- bzw. Oligomere in der Harzmatrix zu einem dreidimensionalen Netzwerk initiiert.

Die Oberflächenstruktur, die sich beim Aushärten der aufgeschmolzenen Harzschichten einstellt, kann eine Tiefe von 50 bis 400µm aufweisen.

Nachdem das Laminat verpresst wurde, wird die Holzwerkstoffplatte 1 in eine Mehrzahl Paneele 11 aufgeteilt. An sich gegenüberliegenden Seitenkanten werden dann Verbindungs- und Verriegelungsmittel 12 nach Art von Nut 13 und Feder 14 an den Seitenkanten der Paneele 11 angefräst. Damit können die Paneele anschließend leimlos verbunden und zur Ausbildung eines schwimmend verlegbaren Fußbodenbelages miteinander verriegelt werden.

### Bezugszeichenliste

- 1: Holzwerkstoffplatte
- 2: Oberseite
- 3: Unterseite
- 4: Primer
- 5: Grundierung
- 6: Dekor
- 6a: Farbschicht
- 6b: Farbschicht
- 6c: Farbschicht
- 7: Schutzschicht
- 8: Gegenzug
- 9: Overlay
- 10: Harzpartikel
- 11: Paneel
- 12: Verriegelungsmittel
- 13: Nut
- 14: Feder

## Patentansprüche

1. Verfahren zur Herstellung einer beidseitig beschichteten dekorierten Holzwerkstoffplatte (1) mit folgenden Schritten:
- Aufbringen einer flüssigen Schicht als Primer (4) auf die Oberseite (2) der Holzwerkstoffplatte (1) unter teilweisem Eindringen des Primers (4) in die Oberseite (2) der Holzwerkstoffplatte (1);
- Aufbringen einer flüssigen Schicht als Grundierung (5) auf den Primer (4);
- Aufbringen einer oder mehrerer flüssiger Farbschichten (6a, 6b, 6c) zur Bildung eines Dekors (6) auf der Grundierung (5);
- Aufbringen einer flüssigen Schutzschicht (7) aus Melamin-Formaldehyd-Harz auf das Dekor (6) und anschließendes Trocknen der Schutzschicht (7);
- Aufbringen wenigstens einer flüssigen Schicht als Gegenzug (8) auf der Unterseite (3) der Holzwerkstoffplatte (1);
- Aufstreuen einer partikelförmigen Schicht als Overlay (9) auf die Schutzschicht (7) auf der dekorierten Oberseite (2), wobei das Overlay (9) wenigstens Harzpartikel (10) umfasst;
- Verpressen der Holzwerkstoffplatte (1) mit dem Schichtaufbau, sodass der gesamte Harzaufbau verflüssigt wird und dadurch bis in die Holzwerkstoffplatte (1) penetrieren kann, zur Ausbildung eines Laminats;
- Aufteilen der Holzwerkstoffplatte (1) in Paneele (11) und
- Anarbeiten von Verbindungs- und Verriegelungsmitteln (12) nach Art von Nut (13) und Feder (14) an den Seitenkanten der Paneele (11) zur leimlosen Verbindung und Verriegelung zur Ausbildung eines schwimmend verlegbaren Fußbodenbelages.

2. Verfahren nach Anspruch 1, **dadurch gekennzeichnet, dass** die eine oder mehrere Farbschichten (6a, 6b, 6c) zur Ausbildung eines Dekors (6) im Tiefdruck- und/oder Digitaldruckverfahren aufgebracht werden.

3. Verfahren nach Anspruch 1, **dadurch gekennzeichnet, dass** als Primer (4) ein Melamin-Formaldehyd-Tränkharz, ein Melamin-Formaldehyd-Leim oder ein Gemisch aus diesen eingesetzt wird. r

4. Verfahren nach Anspruch 3, **dadurch gekennzeichnet, dass** als Primer (4) 20 bis 50g/m² flüssiges Harz mit einem Feststoffanteil von 50% bis 60% aufgetragen werden.

5. Verfahren nach Anspruch 1 oder 2, **dadurch gekennzeichnet, dass** für die Farbschichten (6a, 6b, 6c) pigmentierte Kaseine verwendet werden.

6. Verfahren nach Anspruch 1, **dadurch gekennzeichnet, dass** die Schichten (4, 6a, 6b, 6c) durch Konvektion oder Nahinfrarot (NIR) getrocknet werden.

7. Verfahren nach Anspruch 3, **dadurch gekennzeichnet, dass** der Primer (4) Hilfsstoffe, wie vorzugsweise Netzmittel, Trennmittel, Entschäumer und/oder Härter enthält.

8. Verfahren nach Anspruch 1, **dadurch gekennzeichnet, dass** das Harz für die Schutzschicht (7) Glaskugeln, Zellulose Netzmittel, Trennmittel, Entschäumer und/oder Härter enthält.

9. Verfahren nach Anspruch 1, **dadurch gekennzeichnet, dass** für die Schutzschicht (7) 10 bis 50g, vorzugsweise 20 bis 40g flüssiges Harz aufgetragen wird und der Feststoffanteil im flüssigen Harz etwa 55% beträgt.

10. Verfahren nach Anspruch 1, **dadurch gekennzeichnet, dass** anstelle einer flüssigen Schicht als Gegenzug (8) eine imprägnierte Papierlage auf die Unterseite (3) der Holzwerkstoffplatte (1) aufgebracht wird.

11. Verfahren nach Anspruch 1, **dadurch gekennzeichnet, dass** die flüssige Schicht für den Gegenzug (8) Hilfsstoffe wie vorzugsweise Netzmittel, Trennmittel, Härter und/oder Farbstoffe enthält.

12. Verfahren nach Anspruch 1 oder 11, **dadurch gekennzeichnet, dass** die flüssige Schicht für den Gegenzug (8) in einer Menge von 50 bis 150g/m², vorzugsweise 80 bis 120g/m² flüssigem Harz aufgetragen wird, und das flüssige Harz einen Feststoffanteil von etwa 60% enthält.

13. Verfahren nach Anspruch 1, **dadurch gekennzeichnet, dass** die partikelförmige Schicht für das Overlay (9) Zuschlagstoffe wie Korund, Zellulose, Netzmittel, Trennmittel, Härter, Effekt-Pigmente und/oder Farbpigmente enthält.

14. Verfahren nach Anspruch 1, **dadurch gekennzeichnet, dass** die partikelförmige Schicht für das Overlay (9) in einer Menge von 50 bis 300g/m² aufgetragen wird.

15. Verfahren nach Anspruch 13, **dadurch gekennzeichnet, dass** die Größe der Partikel der Zuschlagstoffe 20 bis 100µm, vorzugsweise 30 bis 70µm beträgt.

16. Verfahren nach Anspruch 1, **dadurch gekennzeichnet, dass** beim Verpressen der Holzwerkstoffplatte (1) zu einem Laminat alle Harzschichten von Primer über Grundierung, Schutzschicht bis zum Overlay aufschmelzen und beim Aushärten das Dekor (6) dauerhaft mit der Holzwerkstoffplatte (1) unter Ausbildung einer Oberflächenstruktur verbinden.

17. Verfahren nach Anspruch 16, **dadurch gekennzeichnet, dass** die Oberflächenstruktur wenigstens teilweise synchron mit dem Dekor (6) verläuft.

18. Verfahren nach Anspruch 16 oder 17, **dadurch gekennzeichnet, dass** die Oberflächenstruktur eine Tiefe von 50 bis 400µm aufweist.

19. Verfahren nach Anspruch 1, **dadurch gekennzeichnet, dass** auf das Overlay (9) vor dem Verpressen antibakteriell und/oder antistatisch wirksame Additive aufgebracht werden.

## Claims

1. Method for producing a decorated wooden board (1) coated on both sides, having the following steps:
- applying a liquid layer as primer (4) to the top side (2) of the wooden board (1), with partial penetration of the primer (4) into the top side (2) of the wooden board (1);
- applying a liquid layer as grounding (5) to the primer (4);
- applying one or more liquid coloured layers (6a, 6b, 6c) to form a decoration (6) on the grounding (5);
- applying a liquid protective layer (7) of melamine formaldehyde resin to the decoration (6) and then drying the protective layer (7);
- applying at least one liquid layer as counterbalance (8) to the underside (3) of the wooden board (1);
- scattering a particulate layer as overlay (9) onto the protective layer (7) on the decorated top side (2), the overlay (9) comprising at least resin particles (10);
- pressing the wooden board (1) with the layer structure, so that the entire resin structure is liquefied and as a result can penetrate as far as into the wooden board (1), in order to form a laminate;
- dividing up the wooden board (1) into panels (11) and
- machining connecting and locking means (12) in the manner of groove (13) and tongue (14) on the side edges of the panels (11) for glue-less connection and locking in order to form a flooring layer that can be laid in a floating manner.

2. Method according to Claim 1, **characterized in that** the one or more coloured layers (6a, 6b, 6c) for forming a decoration (6) are applied in the gravure printing and/or digital printing process.

3. Method according to Claim 1, **characterized in that** the primer (4) used is a melamine formaldehyde impregnating resin, a melamine formaldehyde glue or a mixture thereof.

4. Method according to Claim 3, **characterized in that** 20 to 50 g/m² of liquid resin with a proportion of solids of 50% to 60% is applied as primer (4).

5. Method according to Claim 1 or 2, **characterized in that** pigmented caseins are used for the coloured layers (6a, 6b, 6c).

6. Method according to Claim 1, **characterized in that** the layers (4, 6a, 6b, 6c) are dried by convection or near infrared (NIR).

7. Method according to Claim 3, **characterized in that** the primer (4) contains auxiliaries, such as preferably wetting agents, release agents, defoamers and/or hardeners.

8. Method according to Claim 1, **characterized in that** the resin for the protective layer (7) contains glass spheres, cellulose, wetting agents, release agents, defoamers and/or hardeners.

9. Method according to Claim 1, **characterized in that** 10 to 50 g, preferably 20 to 40 g, of liquid resin is applied for the protective layer (7), and the proportion of solids in the liquid resin is about 55%.

10. Method according to Claim 1, **characterized in that** instead of a liquid layer, an impregnated paper layer is applied as a counterbalance (8) to the underside (3) of the wooden board (1).

11. Method according to Claim 1, **characterized in that** the liquid layer for the counterbalance (8) contains auxiliaries such as preferably wetting agents, release agents, hardeners and/or colorants.

12. Method according to Claim 1 or 11, **characterized in that** the liquid layer for the counterbalance (8) is applied in a quantity of 50 to 150 g/m², preferably 80 to 120 g/m², of liquid resin, and the liquid resin contains a proportion of solids of about 60%.

13. Method according to Claim 1, **characterized in that** the particulate layer for the overlay (9) contains additives such as corundum, cellulose, wetting agents, release agents, hardeners, effect pigments and/or coloured pigments.

14. Method according to Claim 1, **characterized in that** the particulate layer for the overlay (9) is applied in a quantity of 50 to 300 g/m².

15. Method according to Claim 13, **characterized in that** the size of the particles of the additives is 20 to 100 µm, preferably 30 to 70 µm.

16. Method according to Claim 1, **characterized in that** during the pressing of the wooden board (1) to form a laminate, all the resin layers from primer via grounding, protective layer as far as the overlay melt and, during curing, connect the decoration (6) permanently to the wooden board (1), forming a surface structure.

17. Method according to Claim 16, **characterized in that** the surface structure runs at least partly synchronously with the decoration (6).

18. Method according to Claim 16 or 17, **characterized in that** the surface structure has a depth of 50 to 400 µm.

19. Method according to Claim 1, **characterized in that** before the pressing, antibacterially and/or antistatically acting additives are applied to the overlay (9).

## Revendications

1. Procédé pour fabriquer une plaque en matériau à base de bois (1) décorée revêtue des deux côtés, comprenant les étapes suivantes :
- appliquer une couche liquide comme primaire (4) sur la face supérieure (2) de la plaque en matériau à base de bois (1) avec pénétration partielle du primaire (4) dans la face supérieure (2) de la plaque en matériau à base de bois (1),
- appliquer une couche liquide comme apprêt (5) sur le primaire (4) ;
- appliquer une ou plusieurs couches de couleurs liquides (6a, 6b, 6c) pour former un décor (6) sur l'apprêt (5) ;
- appliquer une couche de protection liquide (7) en résine mélamine-formaldéhyde sur le décor (6) et sécher ensuite la couche de protection (7),
- appliquer au moins une couche liquide comme contretraction (8) sur la face inférieure (3) de la plaque en matériau à base de bois (1),
- saupoudrer une couche sous forme de particules comme recouvrement (9) sur la couche de protection (7) sur la face supérieure (2) décorée, le recouvrement (9) comprenant au moins des particules de résine (10),
- comprimer la plaque en matériau à base de bois (1) avec la construction en couche, de sorte que la construction entière en résine est liquéfiée et peut ainsi pénétrer jusque dans la plaque en matériau à base de bois (1), pour former un laminé ;
- diviser la plaque en matériau à base de bois (1) en panneaux (11) et
- ajuster des moyens de liaison et des éléments de verrouillage (12) de type à rainure (13) et languette (14) sur les bords latéraux des panneaux (11) pour relier et verrouiller sans colle pour former un revêtement de plancher pouvant être posé flottant.

2. Procédé selon la revendication 1, **caractérisé en ce que** lesdites une ou plusieurs couches de couleurs (6a, 6b, 6c) sont appliquées pour former un décor (6) par photogravure en creux et/ou par procédé d'impression numérique.

3. Procédé selon la revendication 1, **caractérisé en ce qu'**une résine d'imprégnation à base de mélamine-formaldéhyde, une colle à base de mélamine-formaldéhyde ou un mélange composé de ceux-ci est utilisé comme primaire (4).

4. Procédé selon la revendication 3, **caractérisé en ce que** 20 à 50 g/m² de résine liquide avec une teneur en matière solide de 50% à 60% est appliqué comme primaire (4).

5. Procédé selon la revendication 1 ou 2, **caractérisé en ce que** des caséines pigmentées sont utilisées pour les couches de couleurs (6a, 6b, 6c).

6. Procédé selon la revendication 1, **caractérisé en ce que** les couches (4, 6a, 6b, 6c) sont séchées par convection ou par infrarouge proche (NIR).

7. Procédé selon la revendication 3, **caractérisé en ce que** le primaire (4) contient des matières auxiliaires telles que de préférence de l'agent mouillant, de l'agent de démoulage, de l'agent antimousse, et/ou du durcisseur.

8. Procédé selon la revendication 1, **caractérisé en ce que** la résine pour la couche de protection (7) contient des billes de verre, de la cellulose, de l'agent mouillant, de l'agent de démoulage, de l'agent antimousse et/ou du durcisseur.

9. Procédé selon la revendication 1, **caractérisé en ce que**, pour la couche de protection (7), 10 à 50g, de préférence 20 à 40g de résine liquide, sont appliqués et la teneur en matière solide dans la résine liquide est d'environ 55%.

10. Procédé selon la revendication 1, **caractérisé en ce qu'**à la place d'une couche liquide comme contretraction (8), une feuille de papier imprégnée est appliquée sur la face inférieure (3) de la plaque en matériau à base de bois (1).

11. Procédé selon la revendication 1, **caractérisé en ce que** la couche liquide pour la contretraction (8) contient des matières auxiliaires telles que de préférence de l'agent mouillant, de l'agent de démoulage, du durcisseur et/ou des colorants.

12. Procédé selon la revendication 1 ou 11, **caractérisé en ce que** la couche liquide pour la contretraction (8) est appliquée dans une quantité de 50 à 150g/m², de préférence 80 à 120g/m² de résine liquide et la résine liquide contient une teneur en matière solide d'environ 60%.

13. Procédé selon la revendication 1, **caractérisé en ce que** la couche sous forme de particules pour le recouvrement (9) contient des additifs, tels que du corindon, de la cellulose, de l'agent mouillant, de l'agent de démoulage, du durcisseur, des pigments à effet et/ou des pigments colorés.

14. Procédé selon la revendication 1, **caractérisé en ce que** la couche sous forme de particules pour le recouvrement (9) est appliquée dans une quantité de 50 à 300g/m².

15. Procédé selon la revendication 13, **caractérisé en ce que** la taille des particules d'additifs est de 20 à 100µm, de préférence de 30 à 70µm.

16. Procédé selon la revendication 1, **caractérisé en ce que** lors de la compression de la plaque en matériau à base de bois (1) en un laminé, toutes les couches de résine du primaire en passant par l'apprêt, la couche de protection jusqu'au recouvrement fondent et lors du durcissement toutes les couches relient le décor (6) de façon permanente avec la plaque en matériau à base de bois (1) en formant une structure de surfaces.

17. Procédé selon la revendication 16, **caractérisé en ce que** la structure de surfaces s'étend au moins en partie de manière synchrone avec le décor (6).

18. Procédé selon la revendication 16 ou 17, **caractérisé en ce que** la structure de surfaces présente une profondeur de 50 à 400µm.

19. Procédé selon la revendication 1, **caractérisé en ce que** des additifs efficaces antibactériens et/ou antistatiques sont appliqués sur le recouvrement (9) avant la compression.
